# EUROPEAN PATENT APPLICATION

(11) **EP 2 045 991 A1**
(43) Date of publication of application: **08.04.2009**
(21) Application number: 07019473.3
(22) Date of filing: 04.10.2007
(51) Int. Cl.: H04L 29/06

(54) **Method and device for processing data and communication system comprising such device**

(71) Applicant: Nokia Siemens Networks Oy, 02610 Espoo (FI)
(72) Inventor: Hoffmann, Klaus, 81735 München (DE)
(74) Representative: Bruglachner, Thomas E.

(57) **Abstract**

A method and a device for processing data by a network element is provided, said method comprising the steps of (i) the network element receives information about an entity; (ii) the network element determines whether information associated with said entity is available; and (iii) if information associated with said entity is available, the network element initiates interception. Further, a communication system comprising such a device is provided.

## Description

The invention relates to a method and to a device for processing data and to a communication system comprising such a device.

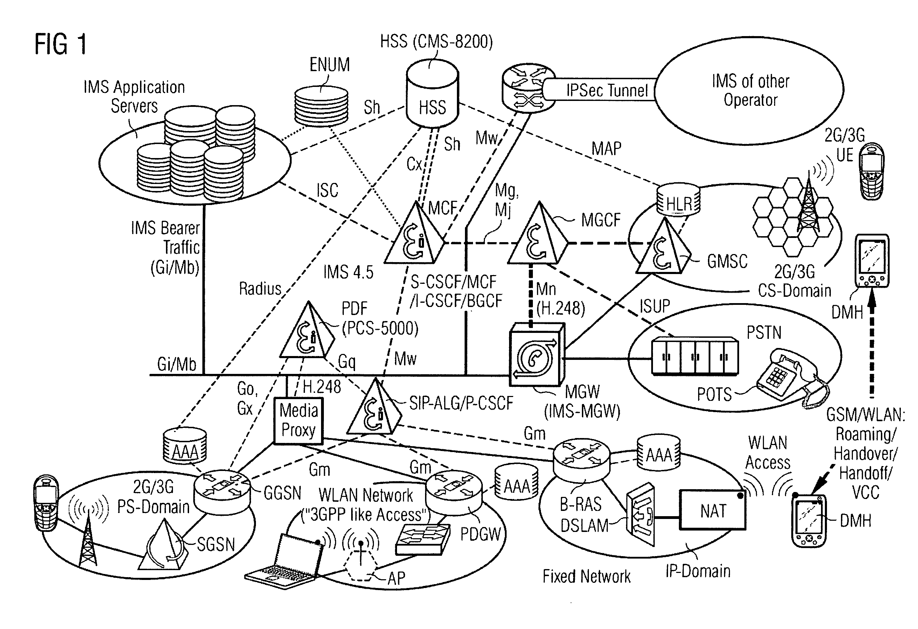

Reference is made to **Fig.1** visualizing an IP Multimedia Subsystem (IMS) architecture comprising an IMS core with at least one Proxy Call Session Control Function (P-CSCF), at least one Interrogating Call Session Control Function (I-CSCF), at least one Serving Call Session Control Function (S-CSCF), at least one Breakout Gateway Control Function (BGCF) and at least one Interconnect Border Control Function (IBCF). Said IMS core is utilized as a telecommunication network based on a Session Initiation Protocol (SIP, see in particular IETF Working Group, RFC 3261).

On top of or based on such network there are additional applications provided by so-called Applications Servers (AS) and/or integrated Service Execution Environments (SEEs), that may in particular be part of and/or comprise the S-CSCF.

There exist in particular several possibilities to handle a call, e.g., a VoIP-call. Regarding an already established call, the following concepts may apply:
- Blind Call Transfer:
   It shall be possible for a user (e.g., any user or a user of a particular group) to transfer a call to a third party without any need to first call the third party himself. In such case, the user may request a blind call transfer of an established call by pressing a key and entering the number of the third party. The call is then directly transferred to the third party.
- Call Transfer during Consultation:
   After putting a first call on hold, dialing and consulting with a third party, the user shall be able to transfer the first call to this third party either by going on-hook or by pressing a transfer key.
- Call Transfer during Ringing:
   After putting a first call on hold and dialing a third party, the user shall be able to transfer the first call either by going on-hook or by pressing a transfer key, while the call to the third party is still ringing.

Another feature to be required is that the IMS core network shall be able to intercept the traffic after a call transfer.

The IMS and/or a Fixed Mobile Conversion (FMC) however, does not provide any means for lawful interception (LI) in case a call (to be) intercepted is transferred.

The **problem** to be solved is to overcome the disadvantages as stated above and to provide an efficient approach in particular for lawful interception in case of call transfer.

This problem is solved according to the features of the independent claims. Further embodiments result from the depending claims.

In order to overcome this problem, a method for processing data by a network element is provided, said method comprising the steps:
- the network element receives information about an entity;
- the network element determines whether information associated with said entity is available;
- if information associated with said entity is available, the network element initiates interception.

In particular, if no such information associated with said entity is available, the network element does not initiate interception.

Hence, it is possible to intercept traffic originating from or associated with one particular entity, i.e. user, subscriber, terminal, party or the like even in case such entity transfers and/or forwards its traffic to another entity of the network.

It is to be noted that interception comprises directing at least a portion of the traffic, in particular the whole traffic, also to a network element that may in particular be associated with a legal authority. Directing in this sense in particular means that such traffic is at least duplicated and branched off to said legal authority without any effect to the existing (ongoing) traffic.

Hence, it is possible that only a video portion and/or an audio portion of the traffic is intercepted. This may in particular be important as only such portion is forwarded or transferred to another entity while another portion of the traffic still remains with the previous entity.

In an embodiment, said entity is or is associated with a user and/or a subscriber and/or a terminal of a communication network.

In another embodiment, the communication network comprises an IP Multimedia Subsystem (IMS).

In a further embodiment, the network element receives information about the entity pursuant to a call-transfer operation.

In a next embodiment, the network element is associated with and/or comprises a Serving Call Session Control Function (S-CSCF) and/or a Service Execution Environment (SEE) and/or an Application Server (AS).

It is also an embodiment that the network element receives a signaling information, in particular a SIP-message, in particular comprising a "referred by"-header.

Such SIP-message may comprise an ID of an entity that has to be intercepted, wherein said entity may have initiated a call transfer of at least a portion of its traffic (in particular its complete traffic). Hence, "referred by X" indicates that an entity X wants to transfer traffic to another entity, say to an entity Y. If information of this entity X is available (thereby indicating that the entity X shall be subject to interception) the portion of the call transferred to the entity Y is also (because originally it comes from the entity X, wherein such entity X may not necessarily be involved anymore) subject to interception. Thus, even if the entity Y is not subject to interception, its traffic may be intercepted because of the call transfer from the entity X to the entity Y.

Pursuant to another embodiment, the network element intercepts or initiates interception of at least a portion of a traffic associated with the entity identified. The network element may initiate interception of at least a portion of a traffic associated with the entity identified via a BGF associated with said network element.

The S-CSCF, in particular together with a Media proxy and/or a Border Gateway Function (BGF) that may be able to duplicate traffic, may intercept at least a portion of a traffic associated with the entity identified. Optionally or as an alternative, the S-CSCF may initiate interception of at least a portion of a traffic associated with the entity identified via a Border Gateway Function (BGF) associated with said S-CSCF.

Hence, the S-CSCF may in particular either directly intercept traffic or it may request interception from a Border Gateway Function (BGF) associated with said S-CSCF.

According to an embodiment, a mapping has been conducted in a preceding network entity such that the information about the entity is mapped to a call diversion information. The network element may be associated with and/or comprises at least one of the following:
- a S-CSCF;
- a P-CSCF;
- a IBCF;
- an AS;
- a SEE
- a MGCF.

The network element may in particular be associated with and/or comprises a P-CSCF and a mapping has been conducted in a preceding S-CSCF (or in any other entity) such that the signaling information (as for instance the "referred-by" header) about the entity is mapped to a call diversion information.

The P-CSCF may comprise a table of identities associated with entities that may be subject to interference. Such table may be administered centrally throughout the network.

A Call Diversion may utilize an information about the entity responsible for a call being diverted as well as a history comprising in particular a list of entities that diverted the particular call. Hence, the call diversion information may comprise such information relating to the (latest) entity that was responsible for the call diversion as well as a list of entities that diverted the call prior to the latest entity. Advantageously, the call diversion information can be utilized by mapping call transfer information to the call diversion information. This enables a P-CSCF succeeding such mapping to interpret the information mapped to the call diversion information such that the call associated with the particular entity is intercepted.

It is to be noted that the call diversion information can be carried in either the history-info header (see, e.g., RFC 4244) or in the diversion header (see "draft-levy-sip-diversion-08.txt", to be found on http://tools.ietf.org/).

Furthermore, the S-CSCF may be enhanced with a Policy Decision Function (PDF) and/or a Border Gateway Function which is invoked when the "referred-by" header of the SIP signaling carries a Uniform Resource Identifier (URI) to be a target of a Legal Interception (LI).

According to another embodiment, the interception forwards at least a portion of traffic to a legal authority.

The traffic may comprise data, in particular user data of various kinds, e.g., video, audio, chat, signaling information, program code, etc. and combinations thereof. The interception, in particular the LI, may forward only a portion of the traffic to the legal authority, in particular to a network element that is associated and/or within the premises of the legal authority. The traffic forwarded to the legal authority does in particular not have any impact on the ongoing traffic between the parties. The parties may be not aware of such forwarding. The forwarding of traffic may further be conducted in an encrypted way (and decrypted at the premises of the legal authority).

In yet another embodiment, the network element obtains the information associated with the entity via a SIP-message.

In particular, the "referred by"-SIP header is used to convey information associated with the entity.

According to a next embodiment, the method is utilized for legal interception purposes.

Pursuant to yet an embodiment, the information, in particular the LI information, associated with said entity is stored locally with the network element. Alternatively or in addition, the information associated with said entity may be stored centrally with and/or distributed throughout the communication network.

The problem stated above is also solved by a device for processing data comprising a processor unit that is equipped and/or arranged such that the method as described is executable on said processor unit.

According to an embodiment, the device is a communication device, in particular a network element, comprising or being associated with at least one of the following:
- a S-CSCF;
- a P-CSCF;
- a IBCF;
- an AS;
- a SEE
- a MGCF.

The problem stated supra is also solved by a communication system comprising the device as described.

Embodiments of the invention are shown and illustrated in the following figures:
- Fig.2: shows an exemplary scenario of a call that is at least partially transferred;
- Fig.3: shows a message chart comprising a partial call transfer.

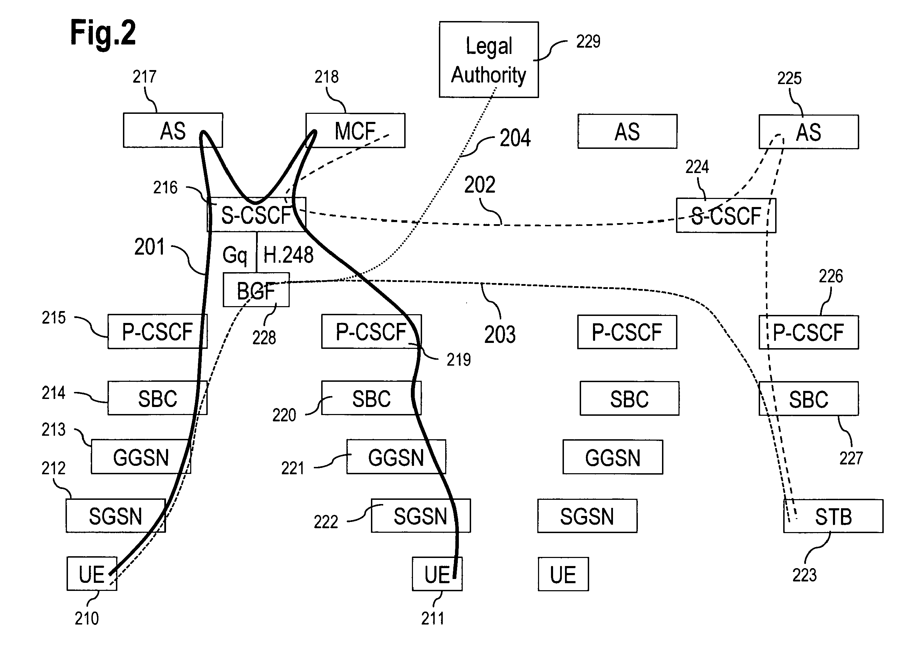

Lawful Interception may be applied by attaching a dedicated LI-capable Border Gateway Function (BGF) to an Application Server or to a S-CSCF via or without a Policy Decision Function (PDF) (see Fig.2 and description below).

As an alternative, call diversion information already handled may be utilized in order to achieve LI regarding various cases of call transfer.

IMS may in particular provide Intercept Related Information (IRI) by the S-CSCF and the P-CSCF may trigger interception of traffic via a Gq-interface and a Policy Decision Function (PDF) at a Border Gateway Function (BGF) associated with this P-CSCF in case a call is being forwarded. Hence, the SIP-signaling may be evaluated by comparing SIP "history-information" headers and/or SIP "diversion" headers with entries of a database that may comprise entities to be observed (and intercepted).

Therefore, an approach is suggested that provides, e.g., a software and/or function and/or procedure in particular associated with a Service Execution Environment (SEE) and/or an Application Server (AS) in the (S-)CSCF that allows comparing the "referred-by" header as received with a SIP-signaling (e.g., in case of call transfer, the initial INVITE-message may comprise such information) with the entities of the LI target database. Such database may be realized as a distributed database among several network elements or as a centralized database of a (portion of a) network. However, the database can be associated, e.g., locally, with the respective network element associated with the (S-)CSCF.

In case there is no match in the database, the function or application (e.g., SEE) does not change the signaling. In another embodiment it may be advantageous to always change the signaling, even if no match was detected, and/or no database is available.

If there is a match found in the database, the function or application (e.g., SEE) may add a SIP-"diversion" header and/or a SIP-"history-info" header to the SIP-signaling thereby mapping the "referred-by" header information to a call diversion information (see RFC 4244, "An Extension to the Session Initiation Protocol (SIP) for Request History Information"). In another embodiment it may be advantageous to always change the signaling, even if no match was detected, and/or no database is available.

This functionality of mapping the information associated with the entity to be intercepted, e.g., the "referred-by"-information, to the call diversion information may be provided by the (S-)CSCF and/or the AS. In particular, an Application Server (AS), e.g., a function performing Legal Interception (LI) on said Application Server, may invoke interception and hence monitor the call diversion information, e.g., the SIP-"history-info" header and/or the SIP-"diversion" header. Hence, the information about an entity to be intercepted is forwarded if call transfer is initiated by such entity. Accordingly, although the call is transferred now, this still allows interception of the entity under surveillance utilizing the call diversion information.

The S-CSCF may send the SIP request either to a P-CSCF or to a Breakout Gateway Control Function (BGCF) and/or a Media Gateway Control Function (MGCF). Any subsequent network element like the P-CSCF in the IMS may trigger interception of the call transferred based on the SIP-"diversion" header and/or the SIP-"history-info" header.

If the LI SEE application and/or the extended S-CSCF functionality and/or the AS require(s) privacy, the P-CSCF will remove the (artificially) inserted SIP-"diversion" header and/or the SIP-"history-info" header from of the SIP signaling. This also applies for the MGCF optionally addressed by the S-CSCF in case of Public Switched Telephone Network (PSTN) interworking.

This approach advantageously allows utilizing S-CSCF as well as P-CSCF without any need of deploying additional LI media gateway functionality.

The headers (artificially) inserted may in particular be removed at the network boundaries. Hence, the user or subscriber will not perceive a change of the underlying service.

Optionally, the LI SEE functionality and/or the extended S-CSCF functionality and/or the AS may be invoked after other application services.

### Further Advantages:

The functionality described allows recognizing the "referred-by" header and copying it into the a SIP-"diversion" header and/or into a SIP-"history-info" header of the SIP signaling thereby enabling in particular existing LI procedures.

Hence, there is no need to deploy dedicated LI capable media gateways (BGFs) at the S-CSCF or at the Application Server (AS).

Utilizing this approach via the Service Execution Environment (SEE) allows an efficient implementation.

As there are new applications to be expected in the future, this approach enriches the operator's service portfolio and simultaneously efficiently fulfills regulatory requirements for newly deployed services.

### Traffic/Call forwarding

**Fig.2** shows an exemplary scenario of a call that is partially transferred.

A UE 210 is connected to a UE 211, traffic is flowing back and forth, here comprising video and audio data (video telephony). Both terminals UE 210 and UE 211 are IMS/SIP-capable user equipments.

An underlying SIP signaling is shown by a path 201, i.e. from the UE 210 via a SGSN 212, a GGSN 213, a SBC 214, a P-CSCF 215, a S-CSCF 216, an AS 217, a MCF 218, the S-CSCF 216, a P-CSCF 219, a SBC 220, a GGSN 221, a SGSN 222 and to the UE 211.

Now, the video portion from the UE 211 is "call transferred" to a STB 223. Hence, after such partial call transfer the UE 210 receives and transmits audio and video traffic, the UE 211 receives and transmits audio traffic and the STB 223 receives and transmits video traffic.

An underlying SIP signaling for the partially transferred traffic is shown by a path 202 from the MCF 218 via a S-CSCF 216, a S-CSCF 224, an AS 225, a P-CSCF 226, a SBC 227 to the STB 223.

The video portion transferred is shown by a path 203 from the UE 210 via the SGSN 212, the GGSN 213, the SBC 214, a BGF 228, the SBC 227 to the STB 223. In addition, the video traffic is branched off at the BGF 228 to the Legal Authority 229 for interception purposes.

The MCF 218 or the S-CSCF 216 sets up the transferred call on behalf of the UE 211 and is able to evaluate the entity (that may be associated with a particular ID) originating the call transfer, i.e., to check whether such entity is subject to interception. In the affirmative, utilizing a Gq-interface via the PDF and/or a H.248-interface, the BGF 228 is inserted between the US 210 and the STB 223 and duplication of the video data to the Legal Authority 229 is initiated.

It is also possible to always provide a BGF together with the S-CSCF whenever the UE 211 or the UE 211 becomes an active party. However, providing the BGF dynamically appears to be more efficient.

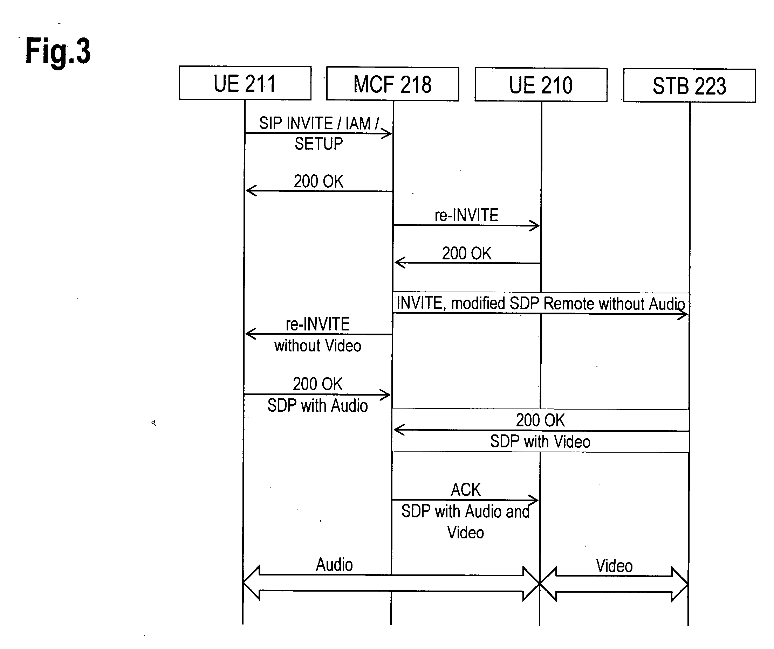

**Fig.3** depicts the communication flow between the network elements shown.

The UE 211 sends a trigger message to the MCF 218, i.e., the UE 211 may send a SIP-INVITE, a IAM or SETUP message intending the video portion to be transferred to the STB 223. In case the UE 211 is a DMH dual mode handset or VCC subscriber (WLAN / SIP / IMS or GSM protocol) this may be either a SIP message or GSM message/ISUP message. The MCF 218 receives the SIP message and sends back a SIP "200 OK" message.

The MCF 218 sends a re-INVITE message to the remote UE 210 without SDP and hence initiates a SDP offer from said UE 210. The UE 210 sends back a SIP "200 OK" message including an own SDP R (remote), i.e. at least the SDP comprising audio as well as video traffic.

The MCF 218 receives the SIP "200 OK" message from the UE 210 comprising SDP R. The MCF 218 obtains video data from the remote party UE 210. These SDP data are stored. Further, the MCF 218 is aware of the nature of the call being a video call on behalf of the UE 211, the video portion of UE 211 however no longer being part of the call, i.e. the video portion is (to be) transferred from the UE 211 to the STB 223, by means of sending the INVITE to the STB 223 without audio. Hence, either the MCF 218 or possibly the S-CSCF 216 (see Fig.2) knowing that this is a somehow transferred call from the UE 211 requests the PDF and/or BGF 228 to initiate interception via the Gq-interface and/or via the H.248-interface.

It is to be noted that the MCF 218 as other Application Servers as well may be connected via SIP (ISC, IMS service control) to the S-CSCF.

The BGF 228 (and/or PDF) acknowledges such request to the S-CSCF 216 thereby informing the S-CSCF 216 about the video SDP IP address as well as the port of the BGF 228. This data is stored and embedded in the INVITE message to be sent to the STB 223 comprising the modified SDP R without the audio portion.

The MCF 218 sends a re-INVITE message to the UE 211, the SDP not comprising the video portion. The UE 211 responds with a "200 OK" message, SDP with audio portion.

The MCF 218 receives the "200 OK" message, stores the data and waits for the response from the STB 223.

The STB 223 receives the INVITE message and responds by sending a "200 OK" message, SDP including the video portion.

The MCF 218 receives the "200 OK" message from the STB 223. Now, the MCF 218 is aware of the fact, that the video portion (to be) directed to the STB 223 is a (portion of a) call on behalf of the UE 211. Hence, the S-CSCF 216 already knows that this is a transferred call and requests the PDF and/or BGF 228 to initiate interception via the Gq-interface and/or the H.248-interface.

The BGF 228 (and/or PDF) acknowledges and the connection is put through.

The MCF 218 has received all responses from all call legs necessary as well as from the BGF 228 and sends an acknowledgement to the remote UE 210 comprising audio and video information in the SDP.

The UE 210 receives the acknowledgement. All parties are now aware of the partial call transfer and know each respective payload recipient. The UE 210 exchanges audio information with the UE 211 and the UE 210 exchanges video information (especially via the BGF 228 connected to the S-CSCF 216) with the STB 223. Hence, the BGF 228 is able to duplicate video traffic and to forward the duplicated stream to the Legal Authority 229.

The trigger indicated above may be associated with the SIP header "referred by".

Hence, in addition to Fig.A.1, "Blind transfer" of ETSI standard TS 183029 v1.1.1 an IP-IP gateway (BGF) may be dynamically set up (or activated) between step "20.INVITE" and step "21.INVITE" in order to duplicate RTP data packets according to the example depicted above.

In a similar manner, this concept can be applied to Fig.A.2, "Consultative transfer" of the above mentioned ETSI standard, wherein the IP-IP gateway (BGF) may be dynamically set up (or activated) between step "14.INVITE" and step "15.INVITE" thereby setting an RTP anchor for duplicating traffic to the Legal Authority. All RTP packets may be redirected due to the SDP manipulation based on the SIP signaling.

### Abbreviations:

- AS: Application Server
- BGCF: Breakout Gateway Control Function
- BGF: Border Gateway Function
- FMC: Fixed Mobile Conversion
- GGSN: Gateway GPRS Support Node
- IBCF: Interconnect Border Control Function
- I-CSCF: Interrogating Call Session Control Function
- IMS: IP Multimedia Subsystem
- IP: Internet Protocol
- IRI: Intercept Related Information
- LI: Legal Interception
- MCF: Mobility Control Function
- MGCF: Media Gateway Control Function
- MLHG: Multiline Hunt Group
- P-CSCF: Proxy Call Session Control Function
- PDF: Policy Decision Function
- PSTN: Public Switched Telephone Network
- RTP: Real-time Transport Protocol
- SBC: Session Border Controller
- S-CSCF: Serving Call Session Control Function
- SDP: Session Description Protocol
- SEE: Service Execution Environment
- SGSN: Serving GPRS Support Node
- SIP: Session Initiation Protocol
- STB: Set Top Box
- UE: User Equipment
- URI: Uniform Resource Identifier
- VoIP: Voice over IP

## Claims

1. A method for processing data by a network element comprising the steps:
- the network element receives information about an entity;
- the network element determines whether information associated with said entity is available;
- if information associated with said entity is available, the network element initiates interception.

2. The method according to claim 1, wherein said entity is or is associated with a user and/or a subscriber and/or a terminal of a communication network.

3. The method according to claim 2, wherein the communication network comprises an IP Multimedia Subsystem.

4. The method according to any of the preceding claims, wherein the network element receives information about the entity pursuant to a call-transfer operation.

5. The method according to any of the preceding claims, wherein the network element is associated with and/or comprises a S-CSCF and/or a SEE and/or an AS.

6. The method according to claim 5, wherein the network element receives a signaling information, in particular a SIP-message, in particular comprising a "referred by"-header.

7. The method according to any of claims 5 or 6, wherein the network element intercepts or initiates interception of at least a portion of a traffic associated with the entity identified.

8. The method according to any of the claims 5 or 6, wherein the network element initiates interception of at least a portion of a traffic associated with the entity identified via a BGF associated with said network element.

9. The method according to any of the claims 1 to 4, wherein a mapping has been conducted in a preceding network entity such that the information about the entity is mapped to a call diversion information.

10. The method according to claim 9, wherein the network element is associated with and/or comprises at least one of the following:
- a S-CSCF;
- a P-CSCF;
- a SEE
- an AS
- a IBCF;
- a MGCF.

11. The method according to any of the preceding claims, wherein the interception forwards at least a portion of traffic to a legal authority.

12. The method according to any of the preceding claims, wherein the network element obtains the information associated with the entity via a SIP-message.

13. The method according to any of the preceding claims, wherein the method is utilized for legal interception purposes.

14. The method according to any of the preceding claims, wherein the information associated with said entity is stored locally with the network element.

15. The method according to any of the preceding claims, wherein the information associated with said entity is stored centrally with and/or distributed throughout the communication network.

16. A device for processing data comprising a processor unit that is equipped / arranged such that the method according of any of the preceding claims is executable on said processor unit.

17. The device according to claim 16, wherein said device is a communication device, in particular a network element, comprising or being associated with at least one of the following:
- a S-CSCF;
- a P-CSCF;
- a IBCF;
- a MGCF.

18. Communication system comprising the device according to any of claims 16 or 17.
